# EUROPEAN PATENT APPLICATION

(11) **EP 4 108 636 A1**
(43) Date of publication of application: **28.12.2022**
(21) Application number: 20908165.2
(22) Date of filing: 25.12.2020
(51) Int. Cl.: C01G 33/00, H01M 4/36, H01M 4/485

(54) **TITANIUM-NIOBIUM COMPOUND OXIDE, AND ELECTRODE AND LITHIUM ION SECONDARY BATTERY USING SAID OXIDE**

(30) Priority: 26.12.2019 JP 2019236372
(71) Applicant: Kubota Corporation, Osaka-shi, Osaka 556-8601 (JP)
(72) Inventor: HIGASHI, Kenji, Amagasaki-Shi, Hyogo 660-0857 (JP); YASUDA, Masafumi, Amagasaki-Shi, Hyogo 660-0857 (JP); OKUMURA, Hiroshi, Amagasaki-Shi, Hyogo 660-0857 (JP); HIRONO, Yoshiyuki, Amagasaki-Shi, Hyogo 660-0857 (JP)
(74) Representative: Grünecker Patent- und Rechtsanwälte PartG mbB
(86) International application number: PCT/JP2020/048641
(87) International publication number: WO 2021/132542

(57) **Abstract**

A titanium-niobium oxide according to the present invention contains less than 0.30 at% of an alkali metal element and at least one element selected from the group consisting of Al, Y, La, Ce, Pr, and Sm. The ratio of the total atomic weight of Al, Y, La, Ce, Pr, and Sm to the total atomic weight of Ti and Nb is equal to or more than 0.001.

## Description

### Technical Field

The present invention relates to titanium-niobium oxides. The present invention also relates to electrodes that employ a titanium-niobium oxide as an electrode active material, and relates as well to lithium-ion secondary cells that employ such an electrode as a cathode or anode.

### Background Art

For their high electric capacity and excellent cycle capacity retention ratio, titanium-niobium oxides are expected to be suitable for use as an active material in lithium-ion secondary cells (see, e.g., Patent Document 1 identified below).

### Citation List

### Patent Literature

Patent Document 1: Japanese unexamined patent application publication No. 2010-287496
Patent Document 2: Japanese unexamined patent application publication No. 2014-225474

### Summary of Invention

### Technical Problem

For example, when a titanium-niobium oxide is synthesized through a solid reaction method, low calcination temperature leads to insufficient reaction, which leaves the intended product, TiNb₂O₇, adulterated with TiO₂ and Ti₂Nb₁₀O₂₉. If a titanium-niobium oxide contains TiO₂ and Ti₂Nb₁₀O₂₉, these degrade the charging-discharging performance of the titanium-niobium oxide.

On the other hand, high calcination temperature, with a view to reducing adulteration with TiO₂ and Ti₂Nb₁₀O₂₉, leads to sufficient reaction, which induces growth of crystal grains (primary particles). Growth of crystal grains, for example, degrades the rate characteristics of lithium-ion secondary cells that employ a titanium-niobium oxide as an electrode active material.

As a remedy, with the aim of achieving sufficient reaction at low calcination temperature, it has been proposed to add an alkali metal element to a titanium-niobium oxide, thereby to increase its reactivity (see, e.g., Patent Document 2 identified above). Inconveniently, simply adding an alkali metal element results in fiber-like growth of crystal grains. This exerts adverse effects such as low active material filling density in electrodes that employ a titanium-niobium oxide as an electrode active material.

Against the background discussed above, an object of the present invention is to provide a titanium-niobium oxide characterized by suppressed adulteration with TiO₂ and Ti₂Nbi₁₀O₂₉ and suppressed growth of crystal grains, and to provide an electrode and a lithium-ion secondary cell that employ such a titanium-niobium oxide.

### Solution to Problem

To achieve the above object, according to one aspect of the present invention, a titanium-niobium oxide contains: less than 0.30 at% (atomic percent) of an alkali metal element; and at least one element selected from the group consisting of Al, Y, La, Ce, Pr, and Sm. The ratio of the total atomic weight of Al, Y, La, Ce, Pr, and Sm to the total atomic weight of Ti and Nb is equal to or more than 0.001. (A first composition.)

In the titanium-niobium oxide of the first composition described above, the ratio of the total atomic weight of Al, Y, La, Ce, Pr, and Sm to the total atomic weight of Ti and Nb may be equal to or more than 0.002. (A second composition.)

In the titanium-niobium oxide of the first or second composition described above, the ratio of the total atomic weight of Al, Y, La, Ce, Pr, and Sm to the total atomic weight of Ti and Nb may be less than 0.024. (A third composition.)

In the titanium-niobium oxide of the third composition described above, the ratio of the total atomic weight of Y to the total atomic weight of Ti and Nb may be equal to or more than 0.001 but equal to or less than 0.011. (A fourth composition.)

In the titanium-niobium oxide of any of the first to fourth compositions described above, when the aspect ratio given as the ratio of the major-axis length to the minor-axis length of primary particles of the titanium-niobium oxide is represented as a volume log-normal distribution, the proportion of the primary particles of which the aspect ratio is more than three may be equal to or less than 11 vol%. (A fifth composition.)

In the titanium-niobium oxide of any of the first to fifth compositions described above, when the major-axis length of primary particles of the titanium-niobium oxide is represented as a volume log-normal distribution, the proportion of the primary particles of which the major-axis length is more than 3 µm may be equal to or less than 5 vol% (volume percent). (A sixth composition.)

In the titanium-niobium oxide of any of the first to sixth compositions described above, part of the surface of the titanium-niobium oxide may be coated with a carbon material. (A seventh composition.)

To achieve the above object, according to another aspect of the present invention, an electrode includes an electrode active material, and at least part of the electrode active material is the titanium-niobium oxide of any of the first to seventh compositions described above. (A eighth composition.)

To achieve the above object, according to yet another aspect of the present invention, a lithium-ion secondary cell includes a cathode and an anode, and one of the cathode and anode is the electrode of the eighth composition described above. (A ninth composition.)

### Advantageous Effects of Invention

According to the present invention, it is possible to provide a titanium-niobium oxide characterized by suppressed adulteration with TiO₂ and Ti₂Nbi₁₀O₂₉ and suppressed growth of crystal grains, and to provide an electrode and a lithium-ion secondary cell that employ such a titanium-niobium oxide.

### Brief Description of Drawings

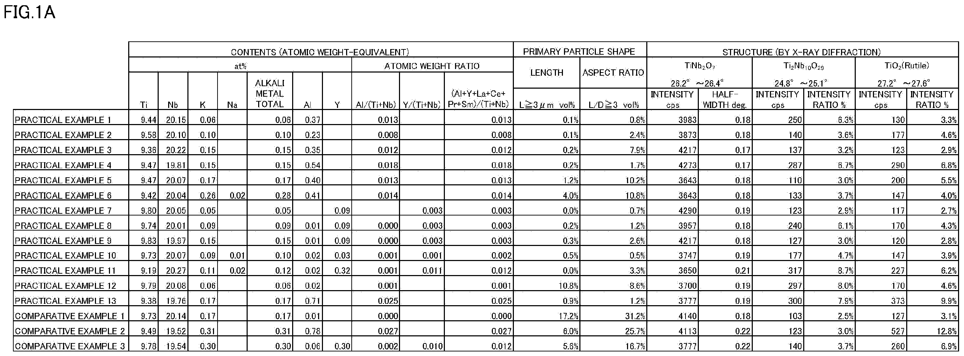

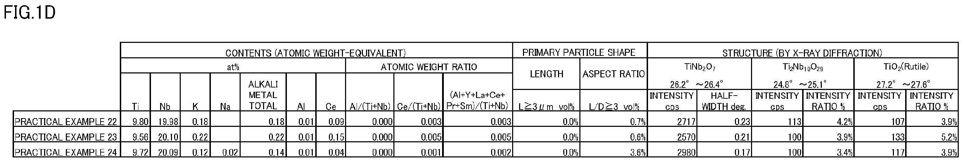

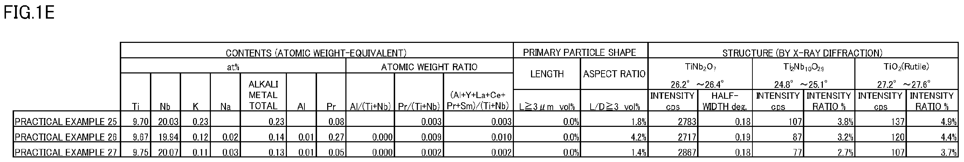

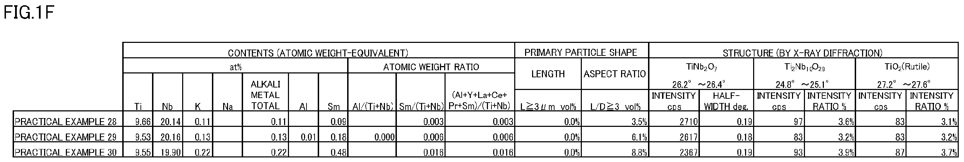

Fig. 1A shows the results of analysis of the titanium-niobium oxides of Practical Examples 1 to 13 and Comparative Examples 1 to 3;

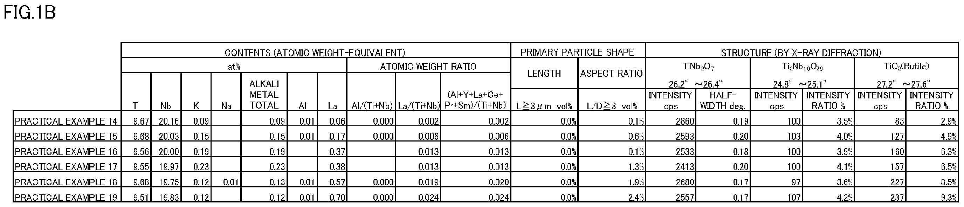

Fig. 1B shows the results of analysis of the titanium-niobium oxides of Practical Examples 14 to 19;

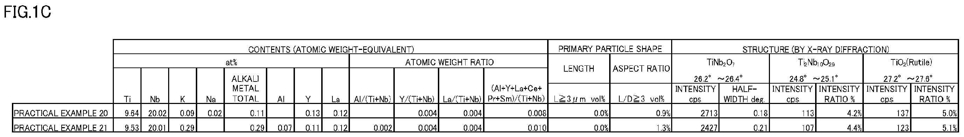

Fig. 1C shows the results of analysis of the titanium-niobium oxides of Practical Examples 20 to 21;
Fig. ID shows the results of analysis of the titanium-niobium oxides of Practical Examples 22 to 24;
Fig. IE shows the results of analysis of the titanium-niobium oxides of Practical Examples 25 to 27;
Fig. IF shows the results of analysis of the titanium-niobium oxides of Practical Examples 28 to 30;
Fig. 2 is a SEM image of the titanium-niobium oxide of Practical Example 3;
Fig. 3 is a SEM image of the titanium-niobium oxide of Comparative Example 1;
Fig. 4 shows the volume log-normal distribution of the major-axis length (L) with respect to the titanium-niobium oxide of Practical Example 3;
Fig. 5 shows the volume log-normal distribution of the major-axis length (L) with respect to the titanium-niobium oxide of Comparative Example 1;
Fig. 6 shows the volume log-normal distribution of the aspect ratio (L/D) with respect to the titanium-niobium oxide of Practical Example 3;
Fig. 7 shows the volume log-normal distribution of the aspect ratio (L/D) with respect to the titanium-niobium oxide of Comparative Example 1; and
Fig. 8 is a schematic diagram showing a 2032 coin cell.

### Description of Embodiments

Embodiments of titanium-niobium oxides embodying the present invention will be described below.

### < Outline >

A titanium-niobium oxide according to the present invention contains less than 0.30 at% (atomic percent) of an alkali metal element and at least one of the elements Al, Y, La, Ce, Pr, and Sm, wherein the ratio of the total atomic weight of Al, Y, La, Ce, Pr, and Sm to the total atomic weight of Ti and Nb is equal to or more than 0.001.

A titanium-niobium oxide according to the present invention contains an alkali metal element, and this suppresses adulteration with TiO₂ and Ti₂Nb₁₀O₂₉. A content of an alkali metal element more than 0.30 at% leads to excessive fiber-like growth of crystal grains, and it is then impossible, even through replacement (as will be discussed later) with at least one of the elements Al, Y, La, Ce, Pr, and Sm, to sufficiently suppress the fiber-like growth of crystal grains.

A titanium-niobium oxide according to the present invention contains at least one of the elements Al, Y, La, Ce, Pr, and Sm, wherein the ratio of the total atomic weight of Al, Y, La, Ce, Pr, and Sm to the total atomic weight of Ti and Nb is equal to or more than 0.001. It is thus presumed that part of the Ti sites, and also part of the Nb sites, in the titanium-niobium oxide are replaced with at least one of the elements Al, Y, La, Ce, Pr, and Sm. Such replacement is considered to suppress fiber-like growth of crystal grains.

However, if the ratio of the total atomic weight of Al, Y, La, Ce, Pr, and Sm to the total atomic weight of Ti and Nb is equal to or more than 0.025, it is presumed that the total atomic weight of Al, Y, La, Ce, Pr, and Sm exceeds the limit for replacement of part of the Ti sites and part of the Nb sites. This may interfere with the reaction promoting effect of the alkali metal element. It is therefore preferable that the ratio of the total atomic weight of Al, Y, La, Ce, Pr, and Sm to the total atomic weight of Ti and Nb be less than 0.025.

### < Example of Manufacturing Method >

A titanium-niobium oxide according to the present invention can be synthesized through, for example, a solid reaction method. One example of a method of synthesizing a titanium-niobium oxide according to the present invention through a solid reaction method will now be described.

A titanium-niobium oxide according to the embodiment is synthesized (manufactured) through a solid reaction method that includes a mixing process and a calcination process.

In the mixing process, the following source materials are weighed in desired content proportions and are crushed and mixed together evenly: a titanium source material (e.g., titanium oxide, or a titanium compound that when heated produces titanium oxide); a niobium source material (e.g., niobium oxide, or a niobium compound that when heated produces niobium oxide); an alkali metal source material (e.g., a carbonate of an alkali metal); and a source material of at least one of the elements aluminum, yttrium, lanthanum, cerium, praseodymium, and samarium (e.g., alumina, yttria, lanthanum oxide, cerium oxide, praseodymium oxide, or samarium oxide).

A niobium source material that contains an alkali metal as an impurity may be used. Likewise a titanium source material that contains an alkali metal as an impurity may be used. In a case where such an impurity provides the necessary content of an alkali metal, no alkali metal source material need be added. On the other hand, in a case where such an impurity provides less than the necessary content of an alkali metal, the amount of alkali metal source material to be added can be determined with consideration given to the amount the impurity provides.

In the mixing process, a crushing-mixing machine such as a ball mill, vibration mill, or bead mill can be used. To prevent depositing of the mixture on the crushing-mixing machine used, alcohol (e.g., ethanol) may be added as an auxiliary agent to the source materials described above.

It is also possible to use a species soluble in the auxiliary agent mentioned above as a source material of at least one of the elements aluminum, yttrium, lanthanum, cerium, praseodymium, and samarium (e.g., aluminum halide, yttrium halide, lanthanum halide, cerium halide, praseodymium halide, or samarium halide). Such a species soluble in the auxiliary agent mentioned above as a source material of at least one of the elements aluminum, yttrium, lanthanum, cerium, praseodymium, and samarium may be used in combination with a species insoluble in the auxiliary agent mentioned above as a source material of at least one of the elements aluminum, yttrium, lanthanum, cerium, praseodymium, and samarium.

In the calcination process, the mixture obtained from the mixing process is kept in an adequate temperature range for an adequate length of time to be calcined in the air. This produces a titanium-niobium having primary particles calcined.

The adequate temperature range and the adequate length of time mentioned above may be any so long as satisfactory crystals are obtained and in addition crystal grains do not grow excessively. The adequate temperature range mentioned above is preferably 1000°C to 1300°C, and more preferably 1100°C to 1200°C. The adequate length of time mentioned above is preferably one hour to 24 hours, and more preferably two hours to six hours. The mixture may be calcined in any atmosphere other than in the air (e.g., a nitrogen atmosphere).

Practical examples of the present invention will now be descried in more detail. These examples, however, are in no way meant to limit the present invention. That is, needless to say, of the various processing methods and granulation methods described below, any parts to which generally known techniques can be applied may be modified accordingly without being restricted by the practical examples described below.

### Examples

### < Practical Example 1 >

The following were crushed and mixed in a vibration mill: 100.0 g of titanium oxide (TiO₂) in powder form, 355.3 g of niobium oxide (Nb₂O₅) in powder form, 0.6 g of potassium carbonate (K₂CO₃) in powder form, and 2.5 g of alumina (Al₂O₃) in powder form, with ethanol added as an auxiliary agent.

The mixture was put in a crucible of alumina, and was calcined in an electric furnace (processing temperature: 1100°C; processing time: 2 hours) to prepare a titanium-niobium oxide.

### < Practical Example 2 >

The following were crushed and mixed in a vibration mill: 100.0 g of titanium oxide in powder form, 349.2 g of niobium oxide in powder form, 0.9 g of potassium carbonate in powder form, and 1.5 g of alumina in powder form, with ethanol added as an auxiliary agent.

The mixture was put in a crucible of alumina, and was calcined in an electric furnace (processing temperature: 1100°C; processing time: 2 hours) to prepare a titanium-niobium oxide.

### < Practical Example 3 >

The following were crushed and mixed in a vibration mill: 100.0 g of titanium oxide in powder form, 359.7 g of niobium oxide in powder form, 1.4 g of potassium carbonate in powder form, and 2.4 g of alumina in powder form, with ethanol added as an auxiliary agent.

The mixture was put in a crucible of alumina, and was calcined in an electric furnace (processing temperature: 1100°C; processing time: 2 hours) to prepare a titanium-niobium oxide.

### < Practical Example 4 >

The following were crushed and mixed in a vibration mill: 100.0 g of titanium oxide in powder form, 348.2 g of niobium oxide in powder form, and 1.4 g of potassium carbonate in powder form, with ethanol, having 7.6 g of aluminum chloride (AlCl₃) in powder form dissolved in it, added as an auxiliary agent.

The mixture was put in a crucible of alumina, and was calcined in an electric furnace (processing temperature: 1100°C; processing time: 2 hours) to prepare a titanium-niobium oxide.

### < Practical Example 5 >

The following were crushed and mixed in a vibration mill: 100.0 g of titanium oxide in powder form, 352.6 g of niobium oxide in powder form, 1.6 g of potassium carbonate in powder form, and 2.7 g of alumina in powder form, with ethanol added as an auxiliary agent.

The mixture was put in a crucible of alumina, and was calcined in an electric furnace (processing temperature: 1100°C; processing time: 2 hours) to prepare a titanium-niobium oxide.

### < Practical Example 6 >

The following were crushed and mixed in a vibration mill: 100.0 g of titanium oxide in powder form, 353.9 g of niobium oxide in powder form, 2.4 g of potassium carbonate in powder form, 0.2 g of sodium carbonate (Na₂CO₃) in powder form, and 2.8 g of alumina in powder form, with ethanol added as an auxiliary agent.

The mixture was put in a crucible of alumina, and was calcined in an electric furnace (processing temperature: 1100°C; processing time: 2 hours) to prepare a titanium-niobium oxide.

### < Practical Example 7 >

The following were crushed and mixed in a vibration mill: 100.3 g of titanium oxide in powder form containing potassium (K) as an impurity, 340.3 g of niobium oxide in powder form, and 1.3 g of yttria (Y₂O₃) in powder form, with ethanol added as an auxiliary agent.

The mixture was put in a crucible of alumina, and was calcined in an electric furnace (processing temperature: 1100°C; processing time: 2 hours) to prepare a titanium-niobium oxide.

### < Practical Example 8 >

The following were crushed and mixed in a vibration mill: 100.0 g of titanium oxide in powder form, 341.7 g of niobium oxide in powder form, 0.8 g of potassium carbonate in powder form, 0.1 g of alumina in powder form, and 1.3 g of yttria in powder form, with ethanol added as an auxiliary agent.

The mixture was put in a crucible of alumina, and was calcined in an electric furnace (processing temperature: 1100°C; processing time: 2 hours) to prepare a titanium-niobium oxide.

### < Practical Example 9 >

The following were crushed and mixed in a vibration mill: 100.0 g of titanium oxide in powder form, 338.1 g of niobium oxide in powder form, 1.3 g of potassium carbonate in powder form, 0.1 g of alumina in powder form, and 1.2 g of yttria in powder form, with ethanol added as an auxiliary agent.

The mixture was put in a crucible of alumina, and was calcined in an electric furnace (processing temperature: 1100°C; processing time: 2 hours) to prepare a titanium-niobium oxide.

### < Practical Example 10 >

The following were crushed and mixed in a vibration mill: 100.0 g of titanium oxide in powder form, 343.8 g of niobium oxide in powder form containing potassium and sodium (Na) as impurities, 0.1 g of alumina in powder form, and 0.5 g of yttria in powder form, with ethanol added as an auxiliary agent.

The mixture was put in a crucible of alumina, and was calcined in an electric furnace (processing temperature: 1100°C; processing time: 2 hours) to prepare a titanium-niobium oxide.

### < Practical Example 11 >

The following were crushed and mixed in a vibration mill: 100.0 g of titanium oxide in powder form, 367.7 g of niobium oxide in powder form containing potassium and sodium as impurities, 0.1 g of alumina in powder form, and 5.0 g of yttria in powder form, with ethanol added as an auxiliary agent.

The mixture was put in a crucible of alumina, and was calcined in an electric furnace (processing temperature: 1100°C; processing time: 2 hours) to prepare a titanium-niobium oxide.

### < Practical Example 12 >

The following were crushed and mixed in a vibration mill: 100.0 g of titanium oxide in powder form, 341.4 g of niobium oxide in powder form, 0.5 g of potassium carbonate in powder form, and 0.1 g of alumina in powder form, with ethanol added as an auxiliary agent.

The mixture was put in a crucible of alumina, and was calcined in an electric furnace (processing temperature: 1100°C; processing time: 2 hours) to prepare a titanium-niobium oxide.

### < Practical Example 13 >

The following were crushed and mixed in a vibration mill: 100.0 g of titanium oxide in powder form, 350.5 g of niobium oxide in powder form, 1.5 g of potassium carbonate in powder form, and 4.8 g of alumina in powder form, with ethanol added as an auxiliary agent.

The mixture was put in a crucible of alumina, and was calcined in an electric furnace (processing temperature: 1100°C; processing time: 2 hours) to prepare a titanium-niobium oxide.

### < Practical Example 14 >

The following were crushed and mixed in a vibration mill: 100.0 g of titanium oxide in powder form, 346.9 g of niobium oxide in powder form, 0.8 g of potassium carbonate in powder form, 0.1 g of alumina in powder form, and 1.2 g of lanthanum oxide (La₂O₃) in powder form, with ethanol added as an auxiliary agent.

The mixture was put in a crucible of alumina, and was calcined in an electric furnace (processing temperature: 1100°C; processing time: 2 hours) to prepare a titanium-niobium oxide.

### < Practical Example 15 >

The following were crushed and mixed in a vibration mill: 100.0 g of titanium oxide in powder form, 344.4 g of niobium oxide in powder form, 1.4 g of potassium carbonate in powder form, 0.1 g of alumina in powder form, and 3.6 g of lanthanum oxide in powder form, with ethanol added as an auxiliary agent.

The mixture was put in a crucible of alumina, and was calcined in an electric furnace (processing temperature: 1100°C; processing time: 2 hours) to prepare a titanium-niobium oxide.

### < Practical Example 16 >

The following were crushed and mixed in a vibration mill: 100.0 g of titanium oxide in powder form, 348.3 g of niobium oxide in powder form, 1.8 g of potassium carbonate in powder form, and 7.9 g of lanthanum oxide in powder form, with ethanol added as an auxiliary agent.

The mixture was put in a crucible of alumina, and was calcined in an electric furnace (processing temperature: 1100°C; processing time: 2 hours) to prepare a titanium-niobium oxide.

### < Practical Example 17 >

The following were crushed and mixed in a vibration mill: 100.0 g of titanium oxide in powder form, 347.8 g of niobium oxide in powder form, 2.1 g of potassium carbonate in powder form, and 8.0 g of lanthanum oxide in powder form, with ethanol added as an auxiliary agent.

The mixture was put in a crucible of alumina, and was calcined in an electric furnace (processing temperature: 1100°C; processing time: 2 hours) to prepare a titanium-niobium oxide.

### < Practical Example 18 >

The following were crushed and mixed in a vibration mill: 100.0 g of titanium oxide in powder form, 339.5 g of niobium oxide in powder form, 1.1 g of potassium carbonate in powder form, 0.1 g of alumina in powder form, 0.1 g of sodium carbonate in powder form, and 12.0 g of lanthanum oxide in powder form, with ethanol added as an auxiliary agent.

The mixture was put in a crucible of alumina, and was calcined in an electric furnace (processing temperature: 1100°C; processing time: 2 hours) to prepare a titanium-niobium oxide.

### < Practical Example 19 >

The following were crushed and mixed in a vibration mill: 100.0 g of titanium oxide in powder form, 347.0 g of niobium oxide in powder form, 1.1 g of potassium carbonate in powder form, 0.1 g of alumina in powder form, and 15.0 g of lanthanum oxide in powder form, with ethanol added as an auxiliary agent.

The mixture was put in a crucible of alumina, and was calcined in an electric furnace (processing temperature: 1100°C; processing time: 2 hours) to prepare a titanium-niobium oxide.

### < Practical Example 20 >

The following were crushed and mixed in a vibration mill: 100.0 g of titanium oxide in powder form, 345.6 g of niobium oxide in powder form, 0.8 g of potassium carbonate in powder form, 0.2 g of sodium carbonate in powder form, 1.9 g of yttria in powder form, and 2.5 g of lanthanum oxide in powder form, with ethanol added as an auxiliary agent.

The mixture was put in a crucible of alumina, and was calcined in an electric furnace (processing temperature: 1100°C; processing time: 2 hours) to prepare a titanium-niobium oxide.

### < Practical Example 21 >

The following were crushed and mixed in a vibration mill: 100.0 g of titanium oxide in powder form, 349.6 g of niobium oxide in powder form, 2.7 g of potassium carbonate in powder form, 0.5 g of alumina in powder form, 1.6 g of yttria in powder form, and 2.5 g of lanthanum oxide in powder form, with ethanol added as an auxiliary agent.

The mixture was put in a crucible of alumina, and was calcined in an electric furnace (processing temperature: 1100°C; processing time: 2 hours) to prepare a titanium-niobium oxide.

### < Practical Example 22 >

The following were crushed and mixed in a vibration mill: 100.0 g of titanium oxide in powder form, 339.3 g of niobium oxide in powder form, 1.6 g of potassium carbonate in powder form, 0.1 g of alumina in powder form, and 2.0 g of cerium oxide (CeO₂) in powder form, with ethanol added as an auxiliary agent.

The mixture was put in a crucible of alumina, and was calcined in an electric furnace (processing temperature: 1100°C; processing time: 2 hours) to prepare a titanium-niobium oxide.

### < Practical Example 23 >

The following were crushed and mixed in a vibration mill: 100.0 g of titanium oxide in powder form, 349.7 g of niobium oxide in powder form, 2.0 g of potassium carbonate in powder form, 0.1 g of alumina in powder form, and 3.3 g of cerium oxide in powder form, with ethanol added as an auxiliary agent.

The mixture was put in a crucible of alumina, and was calcined in an electric furnace (processing temperature: 1100°C; processing time: 2 hours) to prepare a titanium-niobium oxide.

### < Practical Example 24 >

The following were crushed and mixed in a vibration mill: 100.0 g of titanium oxide in powder form, 344.1 g of niobium oxide in powder form, 1.0 g of potassium carbonate in powder form, 0.1 g of alumina in powder form, 0.2 g of sodium carbonate in powder form, and 0.9 g of cerium oxide in powder form, with ethanol added as an auxiliary agent.

The mixture was put in a crucible of alumina, and was calcined in an electric furnace (processing temperature: 1100°C; processing time: 2 hours) to prepare a titanium-niobium oxide.

### < Practical Example 25 >

The following were crushed and mixed in a vibration mill: 100.0 g of titanium oxide in powder form, 343.7 g of niobium oxide in powder form, 2.1 g of potassium carbonate in powder form, and 0.5 g of praseodymium oxide (Pr₂O₃) in powder form, with ethanol added as an auxiliary agent.

The mixture was put in a crucible of alumina, and was calcined in an electric furnace (processing temperature: 1100°C; processing time: 2 hours) to prepare a titanium-niobium oxide.

### < Practical Example 26 >

The following were crushed and mixed in a vibration mill: 100.0 g of titanium oxide in powder form, 343.3 g of niobium oxide in powder form, 1.1 g of potassium carbonate in powder form, 0.3 g of sodium carbonate in powder form, 0.1 g of alumina in powder form, and 1.9 g of praseodymium oxide in powder form, with ethanol added as an auxiliary agent.

The mixture was put in a crucible of alumina, and was calcined in an electric furnace (processing temperature: 1100°C; processing time: 2 hours) to prepare a titanium-niobium oxide.

### < Practical Example 27 >

The following were crushed and mixed in a vibration mill: 100.0 g of titanium oxide in powder form, 342.6 g of niobium oxide in powder form, 0.9 g of potassium carbonate in powder form, 0.3 g of sodium carbonate in powder form, 0.1 g of alumina in powder form, and 0.3 g of praseodymium oxide in powder form, with ethanol added as an auxiliary agent.

The mixture was put in a crucible of alumina, and was calcined in an electric furnace (processing temperature: 1100°C; processing time: 2 hours) to prepare a titanium-niobium oxide.

### < Practical Example 28 >

The following were crushed and mixed in a vibration mill: 100.0 g of titanium oxide in powder form, 347.0 g of niobium oxide in powder form, 1.0 g of potassium carbonate in powder form, and 2.1 g of samarium oxide (Sm₂O₃) in powder form, with ethanol added as an auxiliary agent.

The mixture was put in a crucible of alumina, and was calcined in an electric furnace (processing temperature: 1100°C; processing time: 2 hours) to prepare a titanium-niobium oxide.

### < Practical Example 29 >

The following were crushed and mixed in a vibration mill: 100.0 g of titanium oxide in powder form, 352.0 g of niobium oxide in powder form, 1.2 g of potassium carbonate in powder form, 0.1 g of alumina in powder form, and 4.1 g of samarium oxide in powder form, with ethanol added as an auxiliary agent.

The mixture was put in a crucible of alumina, and was calcined in an electric furnace (processing temperature: 1100°C; processing time: 2 hours) to prepare a titanium-niobium oxide.

### < Practical Example 30 >

The following were crushed and mixed in a vibration mill: 100.0 g of titanium oxide in powder form, 346.8 g of niobium oxide in powder form, 2.0 g of potassium carbonate in powder form, and 10.9 g of samarium oxide in powder form, with ethanol added as an auxiliary agent.

The mixture was put in a crucible of alumina, and was calcined in an electric furnace (processing temperature: 1100°C; processing time: 2 hours) to prepare a titanium-niobium oxide.

### < Comparative Example 1 >

The following were crushed and mixed in a vibration mill: 100.0 g of titanium oxide in powder form, 344.4 g of niobium oxide in powder form, 1.5 g of potassium carbonate in powder form, and 0.1 g of alumina in powder form, with ethanol added as an auxiliary agent.

The mixture was put in a crucible of alumina, and was calcined in an electric furnace (processing temperature: 1100°C; processing time: 2 hours) to prepare a titanium-niobium oxide.

### < Comparative Example 2 >

The following were crushed and mixed in a vibration mill: 100.0 g of titanium oxide in powder form, 342.4 g of niobium oxide in powder form, 2.9 g of potassium carbonate in powder form, and 5.3 g of alumina in powder form, with ethanol added as an auxiliary agent.

The mixture was put in a crucible of alumina, and was calcined in an electric furnace (processing temperature: 1100°C; processing time: 2 hours) to prepare a titanium-niobium oxide.

### < Comparative Example 3 >

The following were crushed and mixed in a vibration mill: 100.0 g of titanium oxide in powder form, 332.4 g of niobium oxide in powder form, 2.7 g of potassium carbonate in powder form, 0.4 g of alumina in powder form, and 4.3 g of yttria in powder form, with ethanol added as an auxiliary agent.

The mixture was put in a crucible of alumina, and was calcined in an electric furnace (processing temperature: 1100°C; processing time: 2 hours) to prepare a titanium-niobium oxide.

### < Analyzing Equipment >

The titanium-niobium oxides of Practical Examples 1 to 30 and Comparative Examples 1 to 3 were analyzed using the following equipment:
X-ray Diffractometer ULTIMA IV, manufactured by Rigaku Corporation, using a Cu-Kα ray;
X-ray Fluorescence Spectrometer ZSX Primus III+, manufactured by Rigaku Corporation; and
Scanning Electron Microscope JSM-6510, manufactured by JEOL Ltd. (Nihon-Denshi).

### < Results of Analysis >

Fig. 1A shows the results of analysis of the titanium-niobium oxides of Practical Examples 1 to 13 and Comparative Examples 1 to 3. Fig. 1B shows the results of analysis of the titanium-niobium oxides of Practical Examples 14 to 19. Fig. 1C shows the results of analysis of the titanium-niobium oxides of Practical Examples 20 to 21. Fig. ID shows the results of analysis of the titanium-niobium oxides of Practical Examples 22 to 24. Fig. IE shows the results of analysis of the titanium-niobium oxides of Practical Examples 25 to 27. Fig. IF shows the results of analysis of the titanium-niobium oxides of Practical Examples 28 to 30. It should be noted that the value "0.000" in Figs. 1A to IF results from rounding off the fourth decimal place and therefore does not mean exactly zero. It should also to be noted that, though in Practical Examples 7, 11, and 14 to 30 the number, out of one hundred measured, of primary particles with the value of L equal to or more than 3 µm was zero, it cannot be asserted that the population included exactly zero particles with the value of L equal to or more than 3 µm; it can only safely be said that the number of primary particles with a major-axis length (L) of 3 mm or more was probabilistically close to zero. That is, in Figs. 1A to IF, "0.0%" does not mean exactly zero.

With respect to each titanium-niobium oxide, the atomic percentages of Ti, Nb, K, Na, the total of alkali metals, Al, Y, La, Ce, Pr, Sm were determined based on the results of analysis on the X-ray fluorescence spectrometer. With respect to each titanium-niobium oxide, the atomic weight ratios Al / (Ti + Nb), Y / (Ti + Nb), La / (Ti + Nb), Ce / (Ti + Nb), Pr / (Ti + Nb), Sm / (Ti + Nb), and (Al + Y + La + Ce + Pr + Sm) / (Ti + Nb) were determined based on the just mentioned atomic percentages.

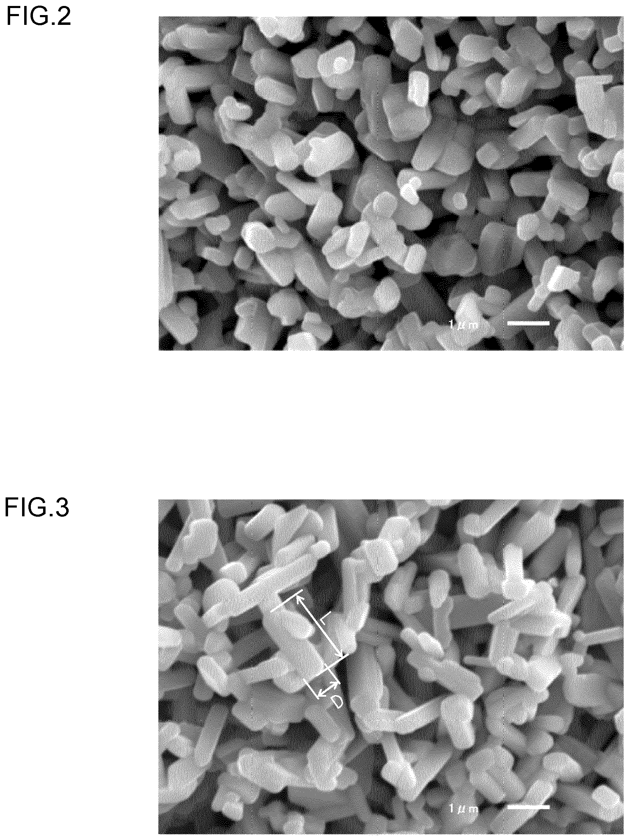

The shape of primary particles of each titanium-niobium oxide was determined based on the results of observation under the scanning electron microscope. Figs. 2 and 3 show examples of SEM images of titanium-niobium oxides. Fig. 2 is a SEM image of the titanium-niobium oxide of Practical Example 3, and Fig. 3 is a SEM image of the titanium-niobium oxide of Comparative Example 1.

A SEM image (at a magnification of 20 000 times) of each titanium-niobium oxide was scanned in the lateral direction so that, for each titanium-niobium oxide, the major-axis length (L) and the minor-axis length (D) of 100 primary particles located on a single line parallel to the lateral direction were measured successively. During the measurement, the magnification was varied up to 40 000 times according to the size of primary particles, and the angle of the sample stage was varied according to the orientation of primary particles.

With the shape of primary particles assumed to be a circular cylinder, for each primary particle of which the major-axis length (L) and the minor-axis length (D) had been measured, its volume was determined. That is, the major-axis length (L) was assumed to be the height of the circular cylinder, and the minor-axis length (D) was assumed to be the diameter of the circular cylinder.

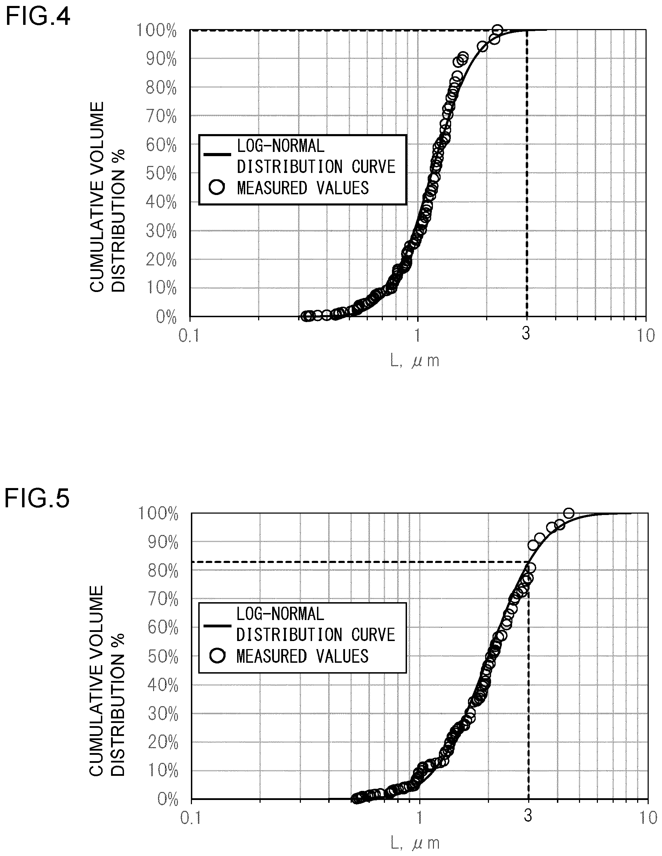

Then, on the basis of not the number of primary particles but the volume of primary particles, from values measured with 100 primary particles, the distribution of the major-axis length (L) across the population (across the entire sample of a titanium-niobium oxide) was estimated. Figs. 4 and 5 show examples of the results of estimation of the volume log-normal distribution of the major-axis length (L) with respect to titanium-niobium oxides. Fig. 4 shows the volume log-normal distribution of the major-axis length (L) with respect to the titanium-niobium oxide of Practical Example 3, and Fig. 5 shows the volume log-normal distribution of the major-axis length (L) with respect to the titanium-niobium oxide of Comparative Example 1. Figs. 1A to IF give the volume proportion of primary particles with a major-axis length (L) of 3 µm or more.

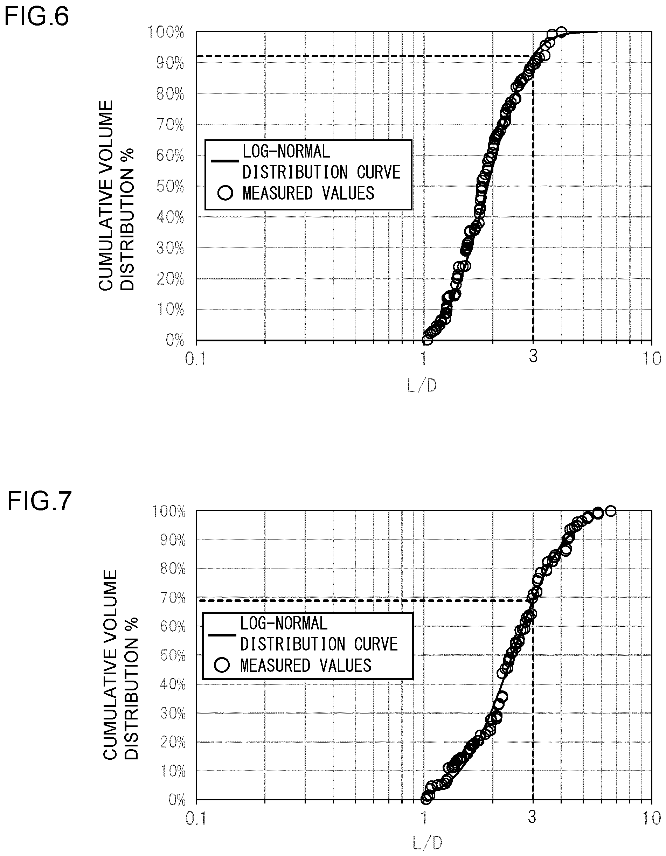

Likewise, on the basis of not the number of primary particles but the volume of primary particles, from values measured with 100 primary particles, the distribution of the aspect ratio (L/D) across the population (across the entire sample of a titanium-niobium oxide) was estimated. Figs. 6 and 7 show examples of the volume log-normal distribution of the aspect ratio (L/D) with respect to titanium-niobium oxides. Fig. 6 shows the volume log-normal distribution of the aspect ratio (L/D) with respect to the titanium-niobium oxide of Practical Example 3, and Fig. 7 shows the volume log-normal distribution of the aspect ratio (L/D) with respect to the titanium-niobium oxide of Comparative Example 1. Figs. 1A to IF gives the volume proportion of primary particles with an aspect ratio (L/D) of three or more.

While in the analysis method described above the shape of primary particles is assumed to be a circular cylinder, the same evaluation results will be obtained when the shape of primary particles is assumed to be a quadrangular prism with a square bottom face.

Figs. 1A to IF give the peak intensity (relative value) at a peak, if any, in the X-ray diffraction spectrum of any of Practical Examples 1 to 30 and Comparative Examples 1 to 3 in each of the ranges of diffraction angles 2θ from 26.2° to 26.4, from 24.8° to 25.1°, and 27.2° to 27.6°. A peak in the range of diffraction angles 2θ from 26.2° to 26.4 is one ascribable to crystals of TiNb₂O₇, which is the intended product. A peak in the range of diffraction angles 2θ from 24.8° to 25.1° is one ascribable to crystals of Ti₂Nb₁₀O₂₉. A peak in the range of diffraction angles 2θ from 27.2° to 27.6° is one ascribable to crystals of rutile TiO₂.

Figs. 1A to IF also give the ratio in percentage of the peak intensity in the range of diffraction angles 2θ from 24.8° to 25.1° to the peak intensity in the range of diffraction angles 2θ from 26.2° to 26.4°, and the ratio of the peak intensity in the range of diffraction angles 2θ from 27.2° to 27.6° to the peak intensity in the range of diffraction angles 2θ from 26.2° to 26.4°.

Figs. 1A to IF further give the half width about a peak in the range of diffraction angles 2θ from 26.2° to 26.4°. The smaller the half width about the peak in the range of diffraction angles 2θ from 26.2° to 26.4°, the better the quality of crystals of Ti₂Nbi₁₀O₂₉ as the intended product.

With the titanium-niobium oxides of Practical Examples 1 to 30, the volume proportion of primary particles with an aspect ratio (L/D) of three or more is equal to or less than 11 vol% (volume percent), and more precisely equal to or less than 10.8 vol%. By contrast, with the titanium-niobium oxides of Comparative Examples 1 to 3, the volume proportion of primary particles with an aspect ratio (L/D) of three or more is equal to or more than 16 vol%, and more precisely equal to or more than 16.7 vol%. Thus the fiber-like growth of primary particles is suppressed more effectively in the titanium-niobium oxides of Practical Examples 1 to 30 than in the titanium-niobium oxides of Comparative Examples 1 to 3.

The titanium-niobium oxides of Practical Examples 1 to 30 have compositions that contain less than 0.30 at% of an alkali metal element(s) and at least one of the elements Al, Y, La, Ce, Pr, and Sm, wherein the ratio of the total atomic weight of Al, Y, La, Ce, Pr, and Sm to the total atomic weight of Ti and Nb is equal to or more than 0.001. By contrast, the titanium-niobium oxides of Comparative Examples 1 to 3 have compositions that fall outside the ranges just mentioned. Preferably the content of an alkali metal element(s) is equal to or more than 0.05 at% but equal to or less than 0.28 at%.

With the titanium-niobium oxide of Comparative Example 1, the ratio of the total atomic weight of Al, Y, La, Ce, Pr, and Sm to the total atomic weight of Ti and Nb is too low to sufficiently suppress fiber-like growth of primary particles. As a result, this titanium-niobium oxide is considered to have a property of tending to have a higher aspect ratio (L/D) of primary particles than the titanium-niobium oxides of Practical Examples 1 to 30. With the titanium-niobium oxides of Comparative Examples 2 to 3, the content of an alkali metal element is too high to sufficiently suppress fiber-like growth of primary particles. As a result, these titanium-niobium oxides are considered to have a property of tending to have a higher aspect ratio (L/D) of primary particles than the titanium-niobium oxides of Practical Examples 1 to 30.

With the titanium-niobium oxides of Practical Examples 1 to 11 and 13 to 30, the volume proportion of primary particles with a major-axis length (L) of 3 µm or more is equal to or less than 5 vol%, and more precisely equal to or less than 4.0 vol%. On the other hand, with the titanium-niobium oxide of Practical Example 12, the volume proportion of primary particles with a major-axis length (L) of 3 µm or more is equal to or more than 10 vol%, and more precisely equal to or more than 10.8 vol%. That is, fiber-like growth of primary particles is suppressed more effectively in the titanium-niobium oxides of Practical Examples 1 to 11 and 13 to 30 than in the titanium-niobium oxide of Practical Example 12.

The titanium-niobium oxides of Practical Examples 1 to 11 and 13 to 30 have compositions where the ratio of the total atomic weight of Al, Y, La, Ce, Pr, and Sm to the total atomic weight of Ti and Nb is equal to or more than 0.002. On the other hand, the titanium-niobium oxide of Practical Example 12 has a composition that falls outside the just-mentioned range.

The titanium-niobium oxides of Practical Examples 1 to 11 and 13 to 30 have higher ratios of the total atomic weight of Al, Y, La, Ce, Pr, and Sm to the total atomic weight of Ti and Nb than the titanium-niobium oxide of Practical Example 12, and thus can suppress growth of primary particles more effectively than the titanium-niobium oxide of Practical Example 12. As a result, it is considered that titanium-niobium oxides of Practical Examples 1 to 11 and 13 to 30 have a property of tending to have primary particles with a major-axis length (L) smaller than the titanium-niobium oxides of Practical Example 12.

With the titanium-niobium oxides of Practical Examples 1 to 11, 14 to 17, and 20 to 30, the ratio of the peak intensity in the range of diffraction angles 2θ from 27.2° to 27.6° to the peak intensity in the range of diffraction angles 2θ from 26.2° to 26.4° is equal to or less than 7%, and more precisely equal to or less than 6.8%. On the other hand, with the titanium-niobium oxides of Practical Examples 13, 18, and 19, the ratio of the peak intensity in the range of diffraction angles 2θ from 27.2° to 27.6° to the peak intensity in the range of diffraction angles 2θ from 26.2° to 26.4° is equal to or more than 8%, and more precisely equal to or more than 8.5%. That is, adulteration with TiO₂ is suppressed more effectively in the titanium-niobium oxides of Practical Examples 1 to 11, 14 to 17, and 20 to 30 than in the titanium-niobium oxides of Practical Examples 13, 18, and 19.

The titanium-niobium oxides of Practical Examples 1 to 11, 14 to 17, and 20 to 30 have compositions where the ratio of the total atomic weight of Al, Y, La, Ce, Pr, and Sm to the total atomic weight of Ti and Nb is less than 0.020. On the other hand, the titanium-niobium oxides of Practical Examples 13, 18, and 19 have compositions that fall outside the just-mentioned range. Preferably the ratio of the total atomic weight of Al, Y, La, Ce, Pr, and Sm to the total atomic weight of Ti and Nb is less than 0.020, and more precisely less than 0.018.

Unlike with the titanium-niobium oxides of Practical Examples 13, 18, and 19, with the titanium-niobium oxides of Practical Examples 1 to 11, 14 to 17, and 20 to 30, the ratio of the total atomic weight of Al, Y, La, Ce, Pr, and Sm to the total atomic weight of Ti and Nb is not too high, and thus it is considered that adulteration with TiO₂ can be suppressed more effectively than with the titanium-niobium oxides of Practical Examples 13, 18, and 19.

The titanium-niobium oxides of Practical Examples 7 to 11 have compositions where the ratio of the total atomic weight of Y to the total atomic weight of Ti and Nb is equal to or more than 0.001 but equal to or less than 0.011. On the other hand, the titanium-niobium oxide of Practical Example 13 has a composition that falls outside the just-mentioned range.

With the titanium-niobium oxides of Practical Examples 7 to 11, the content of Y is not too high and the ratio of the total atomic weight of Y to the total atomic weight of Ti and Nb is within an adequate range, and thus it is considered that adulteration with TiO₂ can be suppressed more effectively than with the titanium-niobium oxide of Practical Example 13, which has too high a content of Al.

### < Application to Lithium-Ion Secondary Cells >

Any of the titanium-niobium oxides of Practical Examples 1 to 30 can be used, for example, as an active material in the manufacture of electrodes. One example of a specific process proceeds as follows. First, 10 parts by weight of polyvinylidene fluoride is dissolved in n-methyl-2-pyrrolidone. Next, 10 parts by weight of a conductive carbon as a conductive auxiliary agent and 100 parts by weight of one of the titanium-niobium oxides of Practical Examples 1 to 30 are added. The mixture is then kneaded in a planetary centrifugal mixer to prepare paint. This paint is applied over aluminum foil, and then the product is vacuum-dried at 120°C, is pressed, and is punched into a circular shape.

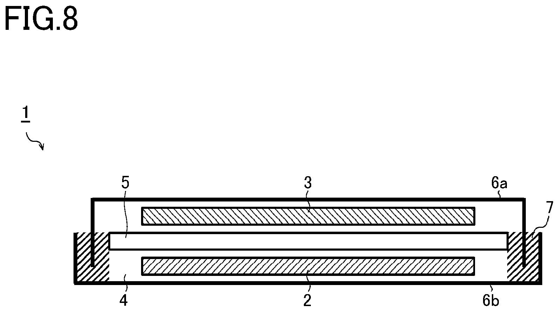

Using the electrode manufactured as described above, for example, a 2032 coin cell 1 as shown in Fig. 8 can be assembled. The 2032 coin cell 1 shown in Fig. 8 is one example of a lithium-ion secondary cell. The 2032 coin cell 1 is manufactured by holding between a top case 6a and a bottom case 6b an electrode 2, an opposite electrode 3, nonaqueous electrolyte 4, and a separator 5 and sealing around the top and bottom cases 6a and 6b with a gasket 7.

Usable as the opposite electrode 3 is, for example, metal lithium foil. Usable as the nonaqueous electrolyte 4 is, for example, 1 mol/L of LiPF₆ dissolved in a 1:1 v/v% mixture of ethylene carbonate and dimethyl carbonate. Usable as the separator 5 is, for example, a microporous membrane of polypropylene.

An electrode in which at least part of an electrode active material is a titanium-niobium oxide according to the present invention can be used as a cathode of a lithium-ion secondary cell or an anode of a lithium-ion secondary cell.

### < Modifications >

The embodiments by way of which the present invention has been described above are in no way meant to limit the scope of the present invention, which thus allows for many modifications without departure from the spirit of the present invention. That is, the embodiments described above should be considered to be in every aspect illustrative and not restrictive, and the technical scope of the present invention should be understood to be defined not by the description of the embodiments given above but by the appended claims and to encompass any modifications made in a sense and scope equivalent to the claims.

For example, while in the practical examples described above the titanium-niobium oxides contain as an alkali metal element K or Na, they may instead contain any other alkali metal element such as Li. Any other alkali metal element such as Li may be contained in a titanium-niobium oxide that does not contain K or Na, or may be contained along with K in a titanium-niobium oxide, or may be contained along with Na in a titanium-niobium oxide. From a comparison between Practical Examples 18 and 19, it is considered that, so long as there is little difference in the alkali metal element content and in the ratio of the total atomic weight of Al, Y, La, Ce, Pr, and Sm to the total atomic weight of Ti and Nb, a composition containing one species of alkali metal element and a composition containing two species of alkali metal elements are similarly effective in suppressing adulteration with TiO₂ and in suppressing growth of crystal grains. Accordingly it is considered that modifying the titanium-niobium oxides of Practical Examples 1 to 30 in terms of the number of species of alkali metal element while keeping substantially constant the alkali metal element content and the ratio of the total atomic weight of Al, Y, La, Ce, Pr, and Sm to the total atomic weight of Ti and Nb leaves them as effective in suppressing adulteration with TiO₂ and in suppressing growth of crystal grains as the titanium-niobium oxides of Practical Examples 1 to 30 as they are.

For another example, while in the practical examples described above no part of the surface of a titanium-niobium oxide is coated with a carbon material, instead part of the surface of a titanium-niobium oxide may be coated with a carbon material.

One example of a manufacturing method of a titanium-niobium oxide of which part of the surface is coated with carbon material proceeds as follows. For example, a water solution of polyvinyl alcohol is added to one of the titanium-niobium oxides of Practical Examples 1 to 30 such that the content of PVA is 13 wt% (weight percent). The mixture is then crushed and mixed in a ball mill, and is then dried with a spray dryer. Thereafter the dried product is heat-treated in a nitrogen environment (processing temperature: 800°C; processing time: 4 hours). Thus a titanium-niobium oxide of which part of the surface is coated with a carbon material is prepared.

### Industrial Applicability

Titanium-niobium oxides according to the present invention find applications, for example, as an electrode active material used in electrodes of lithium-ion secondary cells.

### Reference Signs List

- 1: 2032 coin cell
- 2: electrode
- 3: opposite electrode
- 4: nonaqueous electrolyte
- 5: separator
- 6a: top case
- 6b: bottom case
- 7: gasket

## Claims

1. A titanium-niobium oxide, comprising:
less than 0.30 at% of an alkali metal element; and
at least one element selected from the group consisting of Al, Y, La, Ce, Pr, and Sm,
wherein a ratio of a total atomic weight of Al, Y, La, Ce, Pr, and Sm to a total atomic weight of Ti and Nb is equal to or more than 0.001.

2. The titanium-niobium oxide according to claim 1, wherein
the ratio of the total atomic weight of Al, Y, La, Ce, Pr, and Sm to the total atomic weight of Ti and Nb is equal to or more than 0.002.

3. The titanium-niobium oxide according to claim 1, or 2 wherein
the ratio of the total atomic weight of Al, Y, La, Ce, Pr, and Sm to the total atomic weight of Ti and Nb is less than 0.024.

4. The titanium-niobium oxide according to claim 3, wherein
a ratio of a total atomic weight of Y to the total atomic weight of Ti and Nb is equal to or more than 0.001 but equal to or less than 0.011.

5. The titanium-niobium oxide according to any one of claims 1 to 4, wherein
when an aspect ratio given as a ratio of a major-axis length to a minor-axis length of primary particles of the titanium-niobium oxide is represented as a volume log-normal distribution, a proportion of the primary particles of which the aspect ratio is more than three is equal to or less than 11 vol%.

6. The titanium-niobium oxide according to any one of claims 1 to 5, wherein
when a major-axis length of primary particles of the titanium-niobium oxide is represented as a volume log-normal distribution, a proportion of the primary particles of which the major-axis length is more than 3 µm is equal to or less than 5 vol%.

7. The titanium-niobium oxide according to any one of claims 1 to 6, wherein part of a surface of the titanium-niobium oxide is coated with a carbon material.

8. An electrode, comprising an electrode active material, wherein
at least part of the electrode active material is the titanium-niobium oxide according to any one of claims 1 to 7.

9. A lithium-ion secondary cell, comprising a cathode and an anode, wherein one of the cathode and anode is the electrode according to claim 8.
